# EUROPÄISCHE PATENTSCHRIFT

(11) **EP 0 396 178 B1**
(45) Veröffentlichungstag und Bekanntmachung des Hinweises auf die Patenterteilung: **10.11.1993**
(21) Anmeldenummer: 90201026.3
(22) Anmeldetag: 24.04.1990
(51) Int. Cl.: A47J 43/044

(54) **Kleines elektrisches Haushaltsgerät zum Zerkleinern von Lebensmitteln (Minihacker)**
Small electrical domestic appliance for cutting food products (mini-cutter)
Petit appareil ménager électrique pour couper des aliments (mini hachoir)

(30) Priorität: 29.04.1989 DE 3914371
(43) Veröffentlichungstag der Anmeldung: 07.11.1990
(73) Patentinhaber: Philips Patentverwaltung GmbH, 22335 Hamburg (DE); Philips Electronics N.V., 5621 BA Eindhoven (NL)
(72) Erfinder: Bertram, Leo, D-5190 Stolberg (DE); Schemmann, Hugo, Dr., NL-Schaesberg (NL); Bukoschek, Romuald Leander, A-9020 Klagenfurt (AT)
(74) Vertreter: Peuckert, Hermann, Dipl.-Ing.

(56) Entgegenhaltungen:
- EP-A- 191 161
- DE-A- 2 748 166
- DE-A- 3 624 210
- US-A- 4 159 879
- US-A- 4 528 485
- US-A- 4 813 624

## Beschreibung

Die Erfindung bezieht sich auf ein kleines elektrisches Haushaltsgerät zum Zerkleinern von Lebensmitteln, wie Zwiebeln, Kräutern und Fleisch, mit einem die Lebensmittel aufnehmenden, becherförmigen Gehäuse, in dem von einem elektrischen Antriebsmotor angetriebene Messer umlauffähig angeordnet sind.

Derartige Geräte sind beispielsweise aus der US-A-4 813 624 und DE-A-36 24 210 bekannt. Sie bestehen z.B. aus einem topfartigen Behälter, in welchem ein von einem Elektromotor unmittelbar angetriebenes Messer mit unterschiedlicher Klingenzahl umläuft. Das zu hackende Gut wird in den Behälter gefüllt und durch ein mit großer Geschwindigkeit umlaufendes Messer zerkleinert. Aus Sicherheitsgründen ist der Behälter mit einem Deckel versehen. Der Motor kann nur gestartet werden, wenn der Deckel geschlossen ist.

Es sind Pürierstäbe oder Blender bekannt zum Zerkleinern von kleinen Lebensmittelmengen; sie sind ebenfalls mit schnellaufenden Messern versehen und werden von Hand in einen speziellen Behälter oder ein anderes Verarbeitungsgerät getaucht.

Bei den genannten Geräten kommen schnellaufende Universalmotoren mit einer Leerlaufdrehzahl von 10.000 bis 20.000 U/min und einer aufgenommenen Leistung von einigen hundert Watt zum Einsatz. Sie sind entsprechend großbauend und kostspielig. In neuerer Zeit werden auch hochtourige Bürstenmotoren mit permanentmagnetischer Erregung verwendet. Die Leerlaufdrehzahl dieser Motoren liegt bei etwa 10.000 U/min.

Allen bekannten Geräten ist gemeinsam, daß das Messer direkt an die Motorwelle gekoppelt ist, das Messer also die gleiche hohe Drehzahl hat wie der antreibende Motor. Dies hat zur Folge, daß z.B. beim Hacken von Zwiebeln in einem kleinen Behälter ein musartiger Brei entsteht, der schnell an Geschmack verliert und unansehnlich wird. Verwendet man einen größeren Behälter, so ist das Hackergebnis besser. Man erhält zwar, wie gewünscht, kleine Zwiebelstückchen; diese werden aber von dem Messer gegen die Behälterwand geschleudert und sind nur mit Mühe zu sammeln, um dann weiter verarbeitet zu werden. Ähnliches gilt für das Hacken von Kräutern, wie Petersilie, und für Fleisch.

Zum Hacken von Zwiebeln und Kräutern werden kleine Messerdrehmomente gefordert, wogegen für das Hacken von Fleisch wesentlich höhere Drehmomente benötigt werden. Der Antriebsmotor muß demnach so ausgelegt werden, daß er auch die für das Hacken von Fleisch erforderlichen hohen Drehmomente liefern kann. Bei den genannten hohen Drehzahlen hat dies zur Folge, daß Motoren mit einer großen Leistung eingesetzt werden müssen, die entsprechend groß und kostspielig sind.

Zu diesem Zweck ist es bekannt, durch ein zusätzliches Aufsetzgetriebe das Hacken von Fleisch möglich zu machen. Dies erfordert einen zusatzlichen Aufwand und Aufbewahrungsplatz.

Allgemein hängen die Anforderungen an Schnittgeschwindigkeit und Schnittkraft der Hackmesser ab von den Eigenschaften der zu verarbeitenden Materialien, z.B. von ihrer Härte, Zähigkeit und von der Beschaffenheit, die das Endprodukt haben soll. Die Schnittgeschwindigkeit bei Zwiebeln muß so hoch sein, daß die Zwiebel nicht vor dem Messer hergeschoben wird oder zwischen Behälterwand und Messer stecken bleibt. Die Schnittgeschwindigkeit darf aber auch nicht zu hoch sein, da sonst Zwiebelmus entsteht.

Es ist Aufgabe der Erfindung, unter Verwendung eines kleinbauenden und wirtschaftlichen Antriebsmotors ein kompaktes kleines, handliches Haushaltsgerät zu schaffen, mit dem sowohl Zwiebeln und Kräuter in kleine Stückchen gehackt als auch Fleisch gut verarbeitet werden können, wobei die gehackten Materialien auf einfache Weise aus dem Behälter, in dem die Bearbeitung vorgenommen wurde, entfernt werden können.

Die gestellte Aufgabe ist erfindungsgemäß dadurch gelöst, daß
- als Antriebsmotor ein schnellaufender Motor mit einer abgegebenen Leistung von etwa 50 W eingesetzt wird, der für eine Nenndrehzahl von etwa 6.000 U/min ausgelegt ist,
- die Messergeschwindigkeit mit Hilfe eines fest eingebauten Getriebes auf eine Drehzahl von ca. 1.800 U/min eingestellt ist,
- der Durchmesser des Arbeitsgehälters ca. 95 mm bis 120 mm beträgt,
- die Höhe des Arbeitsbehälters ca. 55 mm bis 100 mm beträgt.

Bei diesen Geschwindigkeiten werden Zwiebeln noch wunschgemäß in kleine Stückchen gehackt und nicht zermust. Andererseits stehen auch die zum Hacken von Fleisch benötigten hohen Drehmomente zur Verfügung.

Durch die Einstellung der Messergeschwindigkeit auf einen Wert von 1.800 U/min werden verschiedene Arbeitsaufgaben mit guter Qualität gelöst. Beim Zwiebelschneiden werden die Zwiebeln wunschgemäß (Stückchen, kein Mus) geschnitten aufgrund der gegenüber einem getriebelosen Gerät belastungsunabhängig reduzierten Schnittgeschwindigkeit. Für das Hacken von Fleisch reicht die Antriebsleistung des verwendeten 50 W-Motors aus. Auch leichte, aber zähe Kräuter mit geringer Masse, wie Petersilie, lassen sich mit der gewählten Geschwindigkeit gut verarbeiten. Durch die Wahl der Behälterabmessungen wird erreicht, daß das Hackgut nicht zum größten Teil gegen die Wände geschleudert wird und daß es leicht aus dem Behälter zu entfernen ist. Durch die Kombination der kennzeichnenden Merkmale ergibt sich ein wirtschaftliches, gut zu handhabendes Mehrzweck-Kleinhaushaltsgerät.

Nach einer weiteren Ausgetaltung der Erfindung kann der Motor ein Universalmotor, ein Permanentmagnetmotor für Netzbetrieb oder aber auch ein Batteriemotor sein.

Nach einer weiteren Ausgestaltung der Erfindung ist vorgesehen, daß der Motor ein bürstenloser Motor mit elektronischer Kommutierung ist. Insbesondere bei hohen Drehzahlen ergeben sich dadurch Vorteile hinsichtlich des Verschleißes, der Lebensdauer, der Geräuschbildung und der Entstörung. Das Betriebsverhalten läßt sich in gewünschter Weise regeln.

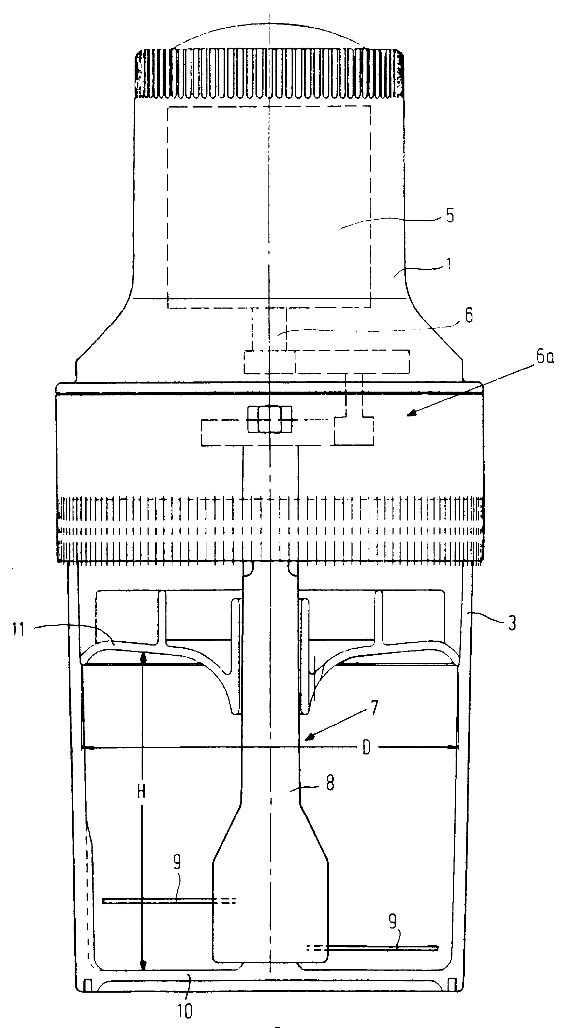

Die Erfindung wird anhand der Zeichnung näher erläutert.

Die Zeichnung zeigt ein kleines elektrisches Haushaltsgerät, einen sogenannten Minihacker, der zum Zerkleinern von kleinen Lebensmittel-Portionen eingerichtet ist. Das Gerät weist ein Motorgehäuse 1 auf, das auf einem Arbeitsbehälter 3 festgesetzt werden kann. In dem Motorgehäuse 1 befindet sich ein schnellaufender Motor 5, beispielsweise ein Universalmotor, Permanentmagnetmotor oder Batteriemotor. Der Motor hat eine Leistung von ca. 50 W bei einer Nenndrehzahl von ca. 6.000 U/min an seiner Welle 6. Der Motor treibt innerhalb des Arbeitsbehälters über ein Getriebe 6a eine Messeranordnung 7 an, die aus einer Welle 8 und Messern 9 besteht, die im unteren Bereich der Welle 8 auf unterschiedlichen Höhen radial von der Welle 9 abstehend befestigt sind.

Die Welle 8 wird von der Motorwelle 6 über das Getriebe 6a angetrieben, welches die Nenndrehzahl der Motorwelle 6 von 6.000 U/min auf eine Arbeitsdrehzahl der Welle 8 von 1.800 U/min reduziert. Der Durchmesser D des Arbeitsbehälters beträgt in seinem Innenraum ca. 95 bis 120 mm. Die Höhe H des Arbeitsbehälters zwischen dem Behälterboden 10 und einer Reflexionskappe 11 beträgt ca. 55 bis 100 mm.

## Patentansprüche

1. Kleines elektrisches Haushaltsgerät zum Zerkleinern von Lebensmitteln, wie Zwiebeln, Kräutern und Fleisch, mit einem die Lebensmittel aufnehmenden, becherförmigen Gehäuse (3), in dem von einem elektrischen Antriebsmotor (5) angetriebene Messer (9) umlauffähig angeordnet sind, dadurch gekennzeichnet, daß
- als Antriebsmotor ein schnellaufender Motor mit einer abgegebenen Leistung von etwa 50 W eingesetzt wird, der für eine Nenndrehzahl von etwa 6.000 U/min ausgelegt ist,
- die Messergeschwindigkeit mit Hilfe eines fest eingebauten Getriebes (6a) auf eine Drehzahl von ca. 1.800 U/min eingestellt ist,
- der Durchmesser des Arbeitsbehälters (3) ca. 95 mm bis 120 mm beträgt,
- die Höhe des Arbeitsbehälters (3) ca. 55 mm bis 100 mm beträgt.

2. Kleines elektrisches Haushaltsgerät nach Anspruch 1, dadurch gekennzeichnet, daß der Motor (5) ein Universalmotor, ein Permanentmagnetmotor oder ein Batteriemotor ist.

3. Kleines elektrisches Haushaltsgerät nach Anspruch 1, dadurch gekennzeichnet, daß der Motor (5) ein bürstenloser Motor mit elektronischer Kommutierung ist.

## Claims

1. A small electric domestic appliance for chopping foods such as onions, herbs and meat, comprising a jug-shaped container (3) accommodating the foods, in which cutter blades (9) driven by an electric driving motor (5) are rotatably arranged, characterised in that -
a high-speed motor having a power output of approx. 50 W and a rated speed of approx. 6,000 r.p.m. is used as the driving motor,
- the cutter speed is adjusted to 1,800 r.p.m. by means of a built-in reduction gear (6a),
- the diameter of the container (3) is approx. 95 mm to 120 mm,
- the height of the container (3) is approx. 55 to 100 mm.

2. A small electric domestic appliance as claimed in Claim 1, characterised in that the motor (5) is a universal motor, a permanent magnet motor, or a battery-fed motor.

3. A small electric domestic appliance as claimed in Claim 1, characterised in that the motor (5) is a brushless motor with electronic commutation.

## Revendications

1. Petit appareil électroménager pour la réduction en menus morceaux d'aliments, tels que des oignons, des herbes et de la viande, comportant un récipient en forme de gobelet (3) recevant les aliments, dans lequel des couteaux (9) entraînés par un moteur électrique d'entraînement (5) sont montés à rotation, caractérisé en ce que:
- un moteur à vitesse élevée d'une puissance utile d'environ 50 W est utilisé comme moteur d'entraînement et est conçu pour un régime nominal d'environ 6000 tours par minute;
- la vitesse des couteaux est réglée à l'aide d'un engrenage de transmission incorporé (6a) à un régime d'environ 1800 tours par minute;
- le diamètre du récipient de travail (3) est d'environ 95 à 120 mm, et
- la hauteur du récipient de travail (3) est d'environ 55 à 100 mm.

2. Petit appareil électroménager suivant la revendication 1, caractérisé en ce que le moteur (5) est un moteur universel, un moteur à aimants permanents ou un moteur à piles.

3. Petit appareil électroménager suivant la revendication 1, caractérisé en ce que le moteur (5) est un moteur sans balais à commutation électronique.
